# EUROPEAN PATENT APPLICATION

(11) **EP 1 041 526 A1**
(43) Date of publication of application: **04.10.2000**
(21) Application number: 00302637.4
(22) Date of filing: 29.03.2000
(51) Int. Cl.: G07G 1/00, G06F 17/60

(54) **Point of sale apparatus**

(30) Priority: 29.03.1999 GB 9907259
(71) Applicant: The Unwins Wine Group Ltd, Dartford, Kent DA1 5AJ (GB)
(72) Inventor: Rutland, Peter c/oThe Unwins Wine Group Ltd., Dartford, Kent DA1 5AJ (GB)
(74) Representative: BROOKES & MARTIN

(57) **Abstract**

Point of sale apparatus comprising:
i) a display unit;
ii) means for displaying a display on the display unit;
iii) means for detecting whether a transaction is being conducted;
iv) means for displaying a display selected from a group when a transaction is not being conducted;
v) means for dividing the display into at least two parts when a transaction is being conducted, a first part comprising a display selected from the group and a second display comprising indicia relating to the transaction being conducted;
vi) at least one third display selected from a group of further displays;
vii) means for associating the third display with one or more selected transactions;
viii) means for determining whether a selected transaction is being conducted; and
ix) means for displaying the third display associated with the selected transaction.

## Description

This invention relates to point of sale ('PCS') apparatus.

GB 2 193 363 describes a system and a method for checkout product promotion. WO 97/08638 describes a point of sale terminal adapted to provide pricing information for selected products. US 4 887 209 describes an electronic cash register system.

According to an embodiment of the invention there is provided a point of sale apparatus comprising:
i) a display unit;
ii) means for displaying a display on the display unit;
iii) means for detecting whether a transaction is being conducted;
iv) means for displaying a display selected from a group when a transaction is not being conducted;
v) means for dividing the display into at least two parts when a transaction is being conducted, a first part comprising a display selected from the group and a second display comprising indicia relating to the transaction being conducted;
vi) at least one third display selected from a group of further displays;
vii) means for associating the third display with one or more selected transactions;
viii) means for determining whether a selected transaction is being conducted; and
ix) means for displaying the third display associated with the selected transaction.

The group of displays may comprise promotional sounds, images or smells.

The group of further displays may comprise information relating to an item involved in the transaction. The group of further displays can comprise information extracted via a look-up table relating to a further item.

A second display may be additionally provided. A third display may also be provided.

The point of sale apparatus can be provided with means for storing data relating to transactions.

The point of sale apparatus can further comprising means for transmitting the stored data to a remote unit.

The point of sale apparatus may further comprise means for uploading information from a remote unit.

According to the invention there is also provided a point of sale network comprising a plurality of point of sale apparatus.

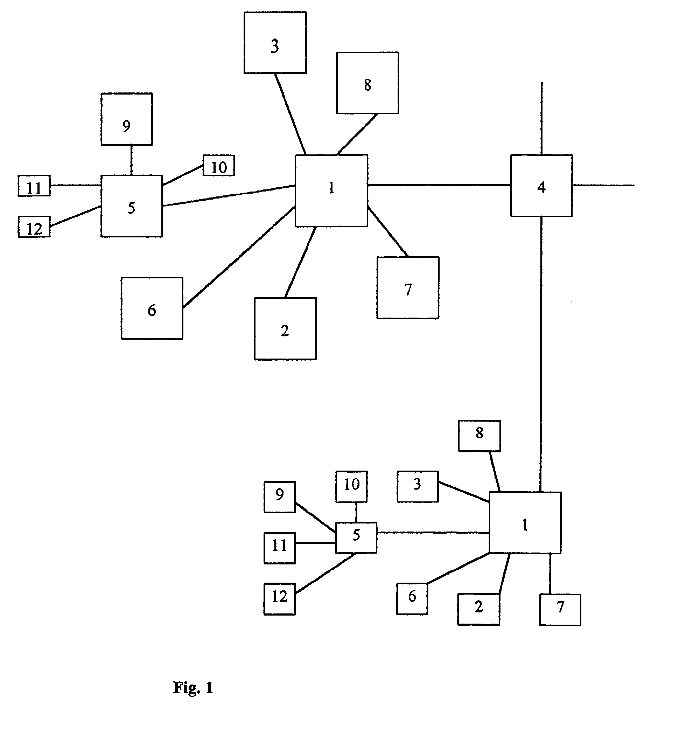

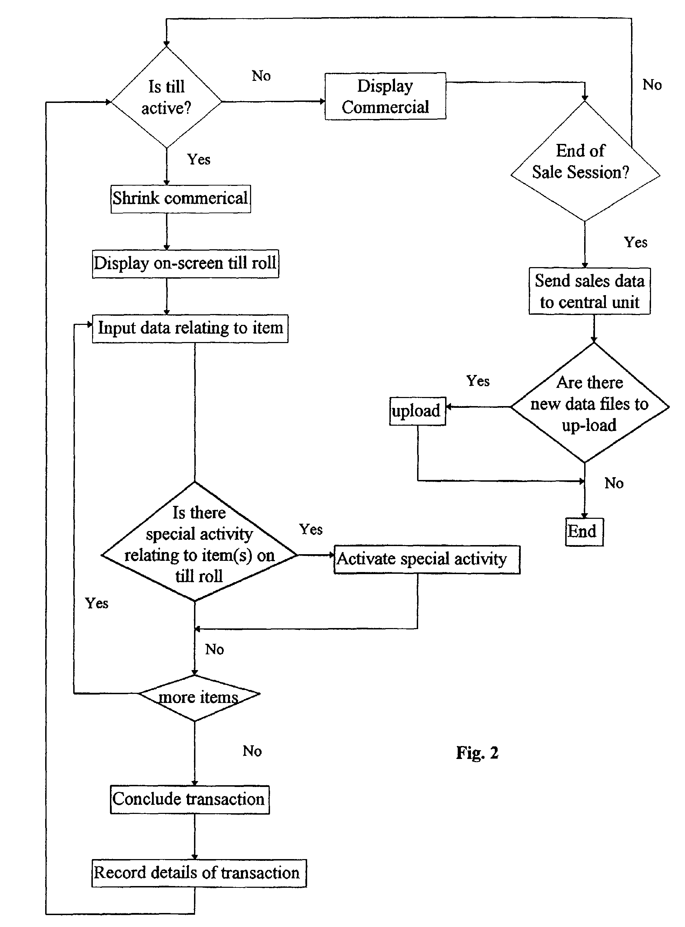

Embodiments of the invention will be discussed by way of nonlimiting example by reference to the figures of which Fig. 1 is a schematic diagram of the apparatus and Fig. 2 is a flow diagram of the system logic.

The apparatus comprises a processing unit 1. Conveniently processing unit 1 comprises a PC for example one running Windows™ NT modified to run a plurality of display devices. Conveniently means for inputting and storing data such as a CD ROM drive 2 and hard drive 3 are provided. In some embodiments of the invention, processing unit I will be connected to a remote, central unit 4 which may be connected to a plurality of processing units 1. The connection may comprise a telephone link such as ISDN link.

Processing unit 1 is connected to till 5. In many embodiments of the invention the processing unit will be contained in the same unit as the till and other components or in a closely adjacent one. It will however be apparent that they need not provided that the processing unit is able to monitor the till for sale activity. Processing unit 1 is further connected to first display unit 6. First display unit 6 may be close to or mounted on till 5. First display unit 6 is intended to display information to the customer. There will generally be a second display unit 8 intended to display information to the operator. The display on the second display unit 8 may display some or all of the information displayed on the first display unit. As described hereinafter in more detail in use the first display 6 may display a till roll. This is preferably displayed on the second display unit 8. As described hereinafter the first display unit 6 may display promotional material of various kinds the second display may display this information too. In some embodiments the second display 8 includes information not displayed on the first display. An example of this could be a script for the operator to use. The processing unit or central unit responsive to the purchases made may select the form of the script displayed. Some embodiments of the invention are provided with one or more third display units 7 which are generally larger than first and second units and positioned remote from the till 5 for example in a window facing out of the shop premises. Till 5 will generally comprise a keyboard 9 for example for entering the amount of cash tendered. It will also generally comprise a scanner 10 for scanning OCR data stripes on the product. Till 5 will generally further comprise means for storing money and vouchers and a printer 11 for printing receipts. A telephone line 12 may be provided as described hereinafter.

In use processing unit 1 monitors the till to see if there is a sales activity. If there is not first display unit displays a promotion, such a moving image and/or sound based advertisement for products or services. The products or services may, but need not, be connected with those provided by the outlet in which the unit is positioned. Thus for example a food retailer could display advertisements of some of the foodstuffs available in store. It could alternatively or additionally display advertisements relating to a clothing retailer with which it has a relationship which may be reciprocal.

The processing unit may monitor for the end of a trading session. It may do this for example by monitoring for an output from a clock, a sequence of keystrokes inputting from the till or it may monitor for a signal from the central unit 4. When the end of a trading session has been detected the processing unit 1 can transmit information relating to sales to the central unit. This is useful because it allows accounting to be kept up to date. Furthermore the effectiveness or otherwise of promotional campaigns can be monitored very quickly and if necessary adjusted.

When the processing unit detects till activity, for example by keystroke, or movement of a scanner the display displays several windows. A first window displays an image of the till roll. This enables the purchaser to see what items have been selected and what the running total cost is. A second window displays an advertisement. Once the processing unit detects the nature of the item selected it determines, for example via a look-up table whether a special activity is associated with the item. The special activity may take the form of displaying an advertisement relating to that item. More subtly an advertisement relating to another item may be displayed. Market research for example may lead one to believe that purchasers of tinned fish are likely to enjoy and buy pickled eggs. When the processing unit detects the selection of tinned fish it may therefore cause the display of promotional material relating to pickled eggs to bring such goods to the mind of the purchaser and therefore encourage him to buy some. Alternatively or additionally the retailer could be running a promotion with say a packet of baby wipes being given away with every two packets of nappies. On detection of the selection of one packet of nappies the display unit could therefore display a message saying that if a further packet of nappies were selected a free packet of wipes would be provided. On detection of the selection of a second packet of nappies a message saying that a free packet of wipes would be provided at the conclusion of the transaction. The processing unit can monitor for acknowledgement that the free item has been produced. Alternatively or additionally a discount may be offered for the purchase of several similar or different items. The processing unit can calculate the discount.

When the transaction is complete. Printer 8 can print a receipt and optionally a credit or debit card voucher. If necessary processing unit 1 can debit accounts electronically via phone line 9. The till can then be unlocked by the processing unit allowing the money or voucher to be stored. In some embodiments of the invention the printer may print a voucher. This may be targeted to particular purchasing patterns. For example a promotion may take the form of providing a voucher to purchasers of pickled eggs entitling them to tinned fish at reduced price. In other embodiments all or some purchasers of goods or services may receive a voucher discount a product or service being promoted.

The first display unit can comprise a colour screen for example a colour flat screen for example of a size in the range 14 to 23" such as 17". This is much larger and potentially visually more attractive then the 2 x 20 character LED system often used.

The third display unit, where provided, may be even larger than the first. In many embodiments it is positioned so that it can be seen from outside the premises. In many embodiments the processing unit will cause advertisements to be displayed on the third display unit. Advertisements may be selected at pseudo random by the processing unit from a group or a run-list may be provided. Care may need to be taken in the advertisements displayed if they are visible from outside the premises since some advertisements for example for tobacco or firearms may not be licensed for public viewing.

Those skilled will have no difficulty in devising modifications.

## Claims

1. Point of sale apparatus comprising:
i) a display unit;
ii) means for displaying a display on the display unit;
iii) means for detecting whether a transaction is being conducted;
iv) means for displaying a display selected from a group when a transaction is not being conducted;
v) means for dividing the display into at least two parts when a transaction is being conducted, a first part comprising a display selected from the group and a second display comprising indicia relating to the transaction being conducted;
vi) at least one third display selected from a group of further displays;
vii) means for associating the third display with one or more selected transactions;
viii) means for determining whether a selected transaction is being conducted; and
ix) means for displaying the third display associated with the selected transaction.

2. The point of sale apparatus of claim 1 wherein the group of displays comprises promotional sounds, images or smells.

3. The point of sale apparatus of claim 1 wherein the group of further displays comprises information relating to an item involved in the transaction.

4. The point of sale apparatus of claim 1 wherein the group of further displays comprises information extracted via a look-up table relating to a further item.

5. The point of sale apparatus of claim 1 further comprising a second display.

6. The point of sale apparatus of claim 5 further comprising a third display.

7. The point of sale apparatus of claim 1 comprising means for storing data relating to transactions.

8. The point of sale apparatus of claim 7 further comprising means for transmitting the stored data to remote unit.

9. The point of sale apparatus of claim 1 further comprising means for uploading information from a remote unit.

10. A point of sale network comprising a plurality of point of sale apparatus of claim 1 linked together.
